# FASCICULE DE BREVET EUROPEEN

(11) **EP 1 414 147 B1**
(45) Date de publication et mention de la délivrance du brevet: **22.12.2010**
(21) Numéro de dépôt: 03291669.4
(22) Date de dépôt: 04.07.2003
(51) Int. Cl.: H02P 23/00, H02H 7/08

(54) **Procédé de mesure de la puissance fournie par un moteur**
Messverfahren für die von einem Motor abgegebene Leistung
Measuring process for the power output by a motor

(30) Priorité: 25.10.2002 FR 0213388
(43) Date de publication de la demande: 28.04.2004
(73) Titulaire: Pompes Salmson, 78400 Chatou (FR)
(72) Inventeur: Trihan, Olivier, 53000 Laval (FR); Kernours, Michel, 35370 Mondevert (FR)
(74) Mandataire: Hirsch & Associés

(56) Documents cités:
- EP-A- 0 834 789
- EP-A- 0 948 126
- FR-A- 2 753 847
- US-A- 4 722 019
- US-A- 4 885 655
- PATENT ABSTRACTS OF JAPAN vol. 1998, no. 3, 27 février 1998 (1998-02-27) & JP 09 289791 A (ITO YOSHINORI), 4 novembre 1997 (1997-11-04)

## Description

La présente invention concerne un procédé de mesure de la puissance fournie par un moteur.

Le document EP-A-0 629 037 décrit un procédé de régulation d'alimentation fournie par un moteur électrique asynchrone monophasé du type à phase principale et à phase auxiliaire permanente. Le procédé consiste à mesurer l'angle de déphasage d'une desdites phases et à réguler l'alimentation du moteur en fonction de la valeur de l'angle de déphasage ainsi mesuré.

Ce procédé a l'inconvénient d'être limité en précision car la mesure de l'intensité et de la tension sur la même phase ne permet que d'obtenir de petites variations de déphasage entre la tension et le courant. Ce procédé ne permet que d'être appliqué à des moteurs d'entraînement de pompe dont la charge moteur est suffisante pour que la variation du déphasage soit grande. Par ailleurs, un bon asservissement avec le procédé de ce document ne peut être obtenu que si d'autres paramètres lui sont associés comme la température du moteur et la tension réelle d'alimentation, entraînant un surcoût prohibitif.

Il y a donc un besoin en un procédé permettant de réguler la puissance délivrer par un moteur, quel que soit le type de pompe et à faible coût.

Pour cela l'invention propose un procédé de mesure de la puissance fournie par un moteur, le moteur comprenant une phase principale et une phase auxiliaire, la phase principale étant branchée en série avec tout ou partie de la phase auxiliaire, le procédé comprenant les étapes de :
- détection de la tension de la phase principale,
- détection de la tension de la partie de la phase auxiliaire en série avec la phase principale,
- détection de l'intensité du courant traversant la phase principale,
- analyse du déphasage entre le courant et la différence des tensions.

Selon un mode de réalisation, l'étape d'analyse du déphasage est réalisée par comparaison des passages à zéro du courant et de la différence des tensions.

Selon un mode de réalisation, le moteur comprend en outre une carte électronique d'asservissement du moteur et le procédé comprend en outre une étape d'asservissement du moteur par la carte électronique après l'étape d'analyse du déphasage.

Selon un autre mode de réalisation, la carte électronique comprend un microcontrôleur effectuant l'étape d'analyse du déphasage.

Le document EP 0948126 décrit un procédé pour l'enregistrement d'au moins un paramètre de l'état de charge d'un moteur asynchrone alimenté en courant alternatif. Le moteur comportant un enroulement principal, des enroulements auxiliaires et un condensateur. Le paramètre caractérisant l'état de charge est déterminé à l'aide du décalage de phase entre deux grandeurs électriques par exemple, les grandeurs sont la tension appliquée sur l'enroulement auxiliaire et la tension appliquée sur l'enroulement principal.

Le document FR 2753847 décrit un circuit de surveillance pour moteur asynchrone monophasé. Ce circuit comporte des moyens pour mesurer les tensions respectivement présentes aux bornes de l'enroulement principal et de l'enroulement auxiliaire du moteur et des moyens pour vérifier la position du point de fonctionnement de ce moteur, obtenue à partir des tensions mesurées, par rapport à deux droites de charge limite, l'une inférieure et l'autre supérieure, définies pour la gamme des tensions applicables au moteur.

Avantageusement, le microcontrôleur effectue l'étape d'asservissement du moteur après avoir effectué l'étape d'analyse.

Selon un mode de réalisation, la carte électronique comprend des résistances montées en parallèle par rapport aux phases principale et auxiliaire.

Selon un mode de réalisation, l'une des résistances est montée aux bornes de la phase principale, l'étape de détection de la tension de la phase principale est effectuée en mesurant la tension aux bornes de ces résistances.

Selon un mode de réalisation, l'une des résistances est montée aux bornes de la phase auxiliaire, l'étape de détection de la tension de la phase auxiliaire est effectuée en mesurant la tension aux bornes de ces résistances.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un schéma d'un montage selon un mode de réalisation de l'invention;
- figure 2, la détermination du déphasage entre intensité et courant ;
- figures 3 à 5, des exemples de réalisation du montage de la figure 1 ;
- figure 6, différentes tensions mesurées à l'oscilloscope.

L'invention concerne un procédé de mesure de la puissance fournie par un moteur dans lequel la mesure du déphasage sur la phase principale du moteur est associée à la sélection de la vitesse réalisée sur la phase auxiliaire. Pour cela, on détecte les tensions de la phase principale et de la partie de la phase auxiliaire en série avec la phase principale ; on détecte aussi le courant traversant la phase principale. Le déphasage entre la différence de ces tensions et du courant traversant la phase principale est ensuite analysé pour commander la puissance fournie par le moteur. Le procédé présente l'avantage d'obtenir un déphasage plus précis ce qui permet d'appliquer le procédé, entre autre, à un moteur alimentant une pompe de faible puissance absorbée.

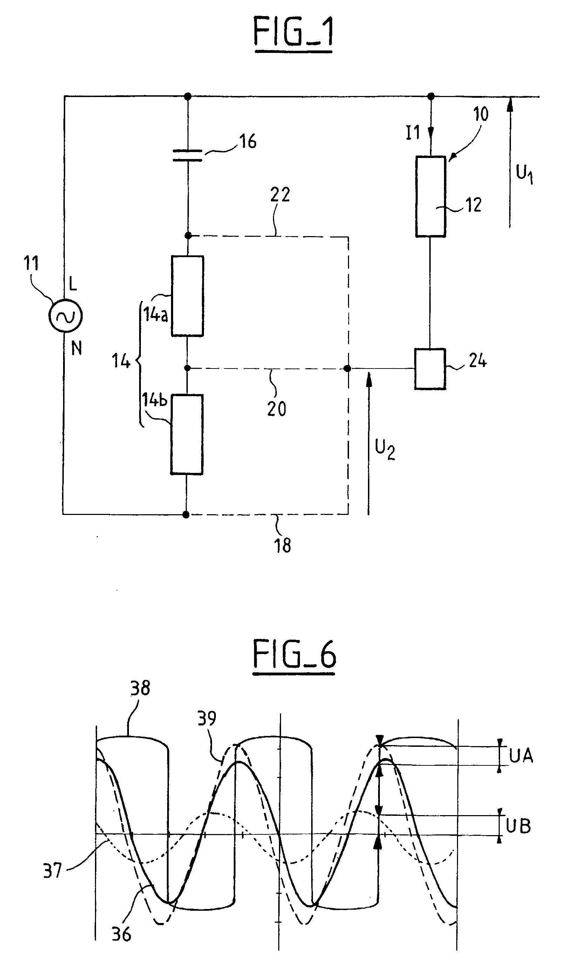

La figure 1 montre un schéma d'un montage selon un mode de réalisation de l'invention. Le montage présente un moteur 10 alimenté par un réseau 11. La tension du réseau 11 présente un branchement neutre au potentiel N et un branchement de phase au potentiel L. Le moteur 10 comporte une phase principale 12 et une phase auxiliaire 14. La phase auxiliaire 14 comprend deux demi-enroulements 14a et 14b. Le moteur 10 comporte également un condensateur de déphasage 16. Le condensateur de déphasage 16 est relié entre le réseau 11 et une extrémité de la phase auxiliaire 14.

La phase principale 12 est sélectivement branchée à tout ou partie de la phase auxiliaire 14. Lorsque la phase principale 12 est reliée à toute la phase auxiliaire 14, le moteur fonctionne en régime de vitesse minimale ; lorsque la phase principale 12 est reliée à un demi-enroulement de la phase auxiliaire 14, le moteur fonctionne en régime de vitesse moyenne ; lorsque la phase principale 12 est reliée au réseau 11 en parallèle avec la phase auxiliaire 14, le moteur 10 fonctionne en régime de vitesse maximale.

Le moteur est par exemple celui de pompes telles que celles destinées à la circulation de l'eau dans les logements, en particulier pour le chauffage.

La mesure du déphasage permet de contrôler la puissance fournie par le moteur et de réguler le fonctionnement de l'installation électrique. Dans le cas d'un entraînement de pompe, selon la puissance absorbée par la pompe, le procédé permet de faire fonctionner la pompe au régime approprié.

Ainsi, si au cours du fonctionnement du moteur alimentant une pompe par exemple, il se produit une variation de fonctionnement ou incident inadmissible à brève échéance ou à terme tel que :
- coupure de l'aspiration de la pompe, ce qui conduit à la dégradation très rapide des paliers de pompe par marche à sec ;
- coupure du circuit de refoulement de la pompe, ce qui peut conduire au chauffage du circuit de pompe et à terme à la dégradation des paliers ;
cet incident de circuit se traduit immédiatement par une diminution importante de la charge du moteur et par une variation inverse du déphasage, c'est-à-dire par une augmentation du paramètre de déphasage. Le déphasage du moteur en fonctionnement se rapproche d'un déphasage seuil au-dessus duquel le fonctionnement du moteur est interrompu pour éviter la dégradation du moteur et/ou de la pompe. Le procédé permet ainsi d'éviter une dégradation de l'installation.

La phase principale 12 comporte une extrémité reliée au réseau 11 et une autre extrémité reliée à la phase auxiliaire 14. La phase principale 12 est branchée en série avec tout ou partie de la phase auxiliaire 14 ce qui permet de faire fonctionner le moteur 10 à des régimes de fonctionnement différents. Pour cela la phase principale 12 a une extrémité, non reliée au secteur, qui peut être sélectivement reliée à la phase auxiliaire. En régime de vitesse maximale, la phase principale 12 et la phase auxiliaire 14 sont reliées en parallèle au réseau 11. L'extrémité de la phase principale 12 est reliée par la branche 18 de circuit au réseau 11. En régime de vitesse moyenne, le phase principale 12 est reliée entre les deux demi-enroulements 14a et 14b par la branche de circuit 20. Ainsi, la phase principale 12 est reliée en série avec la partie 14b de la phase auxiliaire. En régime de vitesse minimale, la phase principale 12 est reliée entre le condensateur de déphasage 16 et une extrémité de la phase auxiliaire 14 par la branche de circuit 22. Ainsi, toute la phase principale 12 est reliée en série avec la phase auxiliaire 14.

Le procédé de mesure de la puissance fournie par le moteur comprend une étape de détection de la tension U1 de la phase principale 12. Le procédé comprend une étape de détection de la tension U2 de la partie de la phase auxiliaire 14 en série avec la phase principale 12. Le procédé comprend aussi une étape de détection du courant I traversant la phase principale 12. Une tension combinée, ou différence de tensions, ΔU est obtenue par différence des tensions U1 et U2. Le déphasage entre la tension combinée ΔU et le courant I est analysé pour déterminer le meilleur régime de fonctionnement du moteur. Le procédé permet d'intégrer l'influence des phases principale et auxiliaire du moteur pour déterminer le déphasage. Ceci permet d'améliorer la mesure du déphasage Dt et d'appliquer ce procédé, entre autre, à des moteurs alimentant des pompes de faible puissance absorbée.

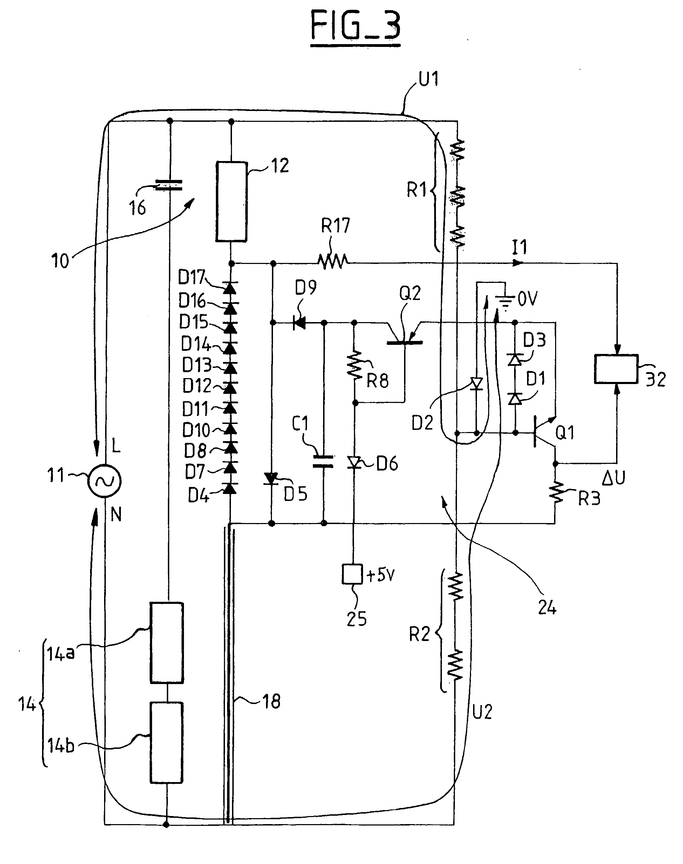

Avantageusement, le moteur comporte une carte électronique 24. La carte électronique 24 permet d'asservir électroniquement le fonctionnement du moteur. La carte électronique 24 peut utiliser le déphasage comme donnée d'entrée pour l'asservissement du fonctionnement du moteur. Le procédé peut ainsi comprendre en plus une étape d'asservissement effectuée par la carte électronique 24, après l'étape d'analyse. Sur la figure 1, la carte 24 permet la commutation entre les trois branches de circuit 18, 20, 22, à l'aide de semi-conducteurs de puissance non représentés, tels que des triacs. Les figures 3 à 5 montrent un schéma de la carte électronique 24. La carte électronique est branchée entre les phases principale 12 et auxiliaire 14 du moteur 10. La carte électronique 24 comprend une alimentation continue basse tension, au potentiel +5V. La référence 0V ou masse électrique de l'alimentation +5V est à un potentiel flottant et varie selon le régime de fonctionnement. La masse électrique de l'alimentation +5V de la carte est sensiblement au potentiel :
- N du réseau dans le cas de la vitesse maximale de la figure 1, la phase principale 12 étant reliée par la branche 18 au réseau 11 ;
- du demi-enroulement 14b dans le cas de la vitesse moyenne, la phase principale 12 étant reliée en série avec le demi-enroulement 14b par la branche 20 ;
- du point commun entre la phase auxiliaire 14 et le condensateur 16 dans le cas de la petite vitesse, la phase principale 12 étant reliée par la branche 22 au point commun de la phase auxiliaire 14 et du condensateur 16.

La carte 24 peut comprendre un microcontrôleur 32 contrôlant la permutation des régimes de fonctionnement du moteur. Le microcontrôleur 32 analyse le déphasage entre le courant I1 et la différence des tensions des phases principale 12 et auxiliaire 14 du moteur 10. L'analyse du déphasage permet au microcontrôleur 32 d'adapter le régime de fonctionnement du moteur à la charge qui lui est imposée. Ceci permet de réduire la consommation d'énergie. Pour la détermination du déphasage, le microcontrôleur 32 prend en considération les tensions des phases principales et auxiliaire ce qui rend l'analyse plus précise. Le microcontrôleur 32 commande les triacs pour effectuer la permutation des régimes de fonctionnement du moteur.

La carte 24 comprend des résistances R1 et R2. La résistance R1 détermine la tension U1 correspondant à la tension sur la phase principale, prélevée entre le potentiel du réseau L et la masse électrique de l'alimentation +5V de la carte. La résistance R2 détermine la tension U2 correspondant à la tension sur la partie de la phase auxiliaire 14 en série avec la phase principale, prélevée entre le potentiel du réseau N et la masse électrique de l'alimentation +5V de la carte. Ceci permet d'avoir un point commun entre les tensions U1 et U2, permettant un traitement des signaux U1 et U2 de façon simple. La détermination des tensions U1 et U2 sur la carte 24 est avantageuse car l'accès aux phases principale 12 et secondaire 14 pour la mesure des tensions à leurs bornes est plus difficile. La détermination des tensions U1 et U2 sur la carte 24 évite une isolation galvanique d'un des signaux de tension par rapport à l'alimentation +5V de la carte 24, et évite un circuit de traitement complexe des signaux de tensions U1 et U2. Les résistances R1 et R2 sont connectées à la base d'un transistor Q1. La carte 24 comporte aussi des diodes D1-D2-D3 de détection du passage à zéro de la tension combinée ΔU. Les diodes D1 à D3 sont reliées à la base du transistor Q1. Les diodes D1 et D3, d'une part, et la diode D2, d'autre part, génèrent respectivement des créneaux positif et négatif, de faible amplitude (+0.6 V et -0.3 V, respectivement). Les créneaux ont des fronts synchronisés sur les passages à zéro de la tension combinée ΔU. Une résistance R3 de polarisation est associée au transistor Q1.

Le transistor Q1 permet d'amplifier et de convertir le signal des diodes D1 à D3 en un signal logique inversé et compatible (niveau haut +5V et niveau bas 0V) avec le microcontrôleur de la carte pour l'acquisition de tension. L'ensemble des composants, transistor Q1, diodes D1 à D3 et résistance R3, correspond à un générateur de signaux rectangulaires synchronisés sur le passage à zéro de la tension combinée ΔU.

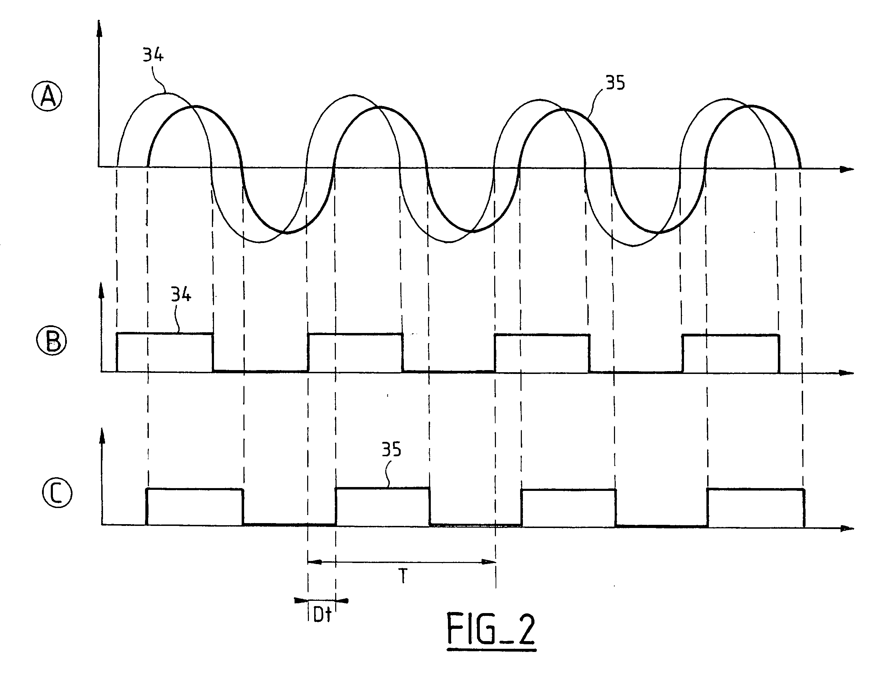

Le pont de diodes D4 à D17 est branché en série avec une extrémité de la phase principale du moteur. Le pont est traversé par le courant de la phase principale du moteur et ces diodes sont passantes lors de l'alternance positive, permettant la détection du passage à zéro de ce signal, référencé I1 sur les figures 2 à 4. La tension globale aux bornes de D4 à D17, dans le sens passant des diodes, est pratiquement constante quel que soit l'amplitude du courant de la phase principale (la chute de tension aux bornes d'une diode est d'environ 0,7 V dans le sens passant). Un avantage des diodes D4 à D17 est que le signal à leurs bornes a des fronts raides permettant d'avoir des passages précis à zéro du signal du courant de la phase principale.

La carte 24 comprend en outre des composants Q2, C1, D9, D5, R8, D6. Le condensateur C1 est un condensateur de lissage et de stockage d'énergie. Il permet de constituer une tension continue à partir de la tension alternative aux bornes des diodes D4 à D17, d'alternance positive (sens D4 à D17) et d'amplitude de 7 à 9 V. La tension (alternance positive) aux bornes des diodes D4 à D17 est créée par la chute de tension de chaque diode traversée par le courant de la phase principale du moteur. Les composants Q2 - R8 - D6 permettent la régulation de la tension continue +5V pour l'alimentation de la carte électronique 24. Le transistor Q2 est monté en ballast et dont la base est polarisée par la résistance R8 et maintenue à un potentiel fixé par la diode Zener D6. Les diodes D4 à D 17 permettent le passage du courant de la phase principale pendant l'alternance positive (sens D4 vers D17) ; lors de l'alternance négative, la diode D5 permet alors le passage du courant de la phase principale dans le sens D 17 vers D4. La diode D9 permet le blocage du courant de la phase principale pendant l'alternance négative, afin d'éviter que la condensateur de stockage d'énergie C1 se décharge aussitôt dans le circuit de la phase principale.

La figure 2 montre l'analyse du déphasage entre l'intensité du courant I1 dans la phase principale et la différence de tensions, ou tension combinée, U1, U2 dans les phases principale 12 et auxiliaire 14. Avantageusement, l'analyse du déphasage est réalisée par comparaison des passages à zéro du courant et de la tension combinée ΔU. La figure 2 montre trois diagrammes de traitement des signaux de tension combinée et de courant dans la phase principale pour la détermination du déphasage Dt. Sur le diagramme A, la courbe 34 représente la variation de la tension combinée des tensions des phases du moteur ; la courbe 35 représente la variation du courant parcourant la phase principale. La courbe B représente le traitement de la tension combinée. La courbe B représente un signal en créneau, le signal changeant d'état lors de la détection du passage à zéro de la tension combinée. La courbe C représente le traitement du courant parcourant la phase principale. La courbe C représente un signal en créneau, le signal changeant d'état lors de la détection du passage à zéro du courant. Ainsi, à l'aide des courbes B et C, on peut déterminer la valeur du déphasage Dt entre la tension et le courant. Les diodes D1 et D3 d'une part et D4 à D17 d'autre part permettent d'avoir des fronts raides et ainsi des passages précis à zéro.

Les figures 3 à 5 montre des schémas de détection des tensions par régime de fonctionnement sélectionné.

Sur la figure 3, le moteur est en régime de vitesse maximal. La phase principale et la phase secondaire sont branchées en parallèle sur le réseau 11. La phase principale est reliée au réseau 11 par l'intermédiaire de la branche 18 de circuit. L'alimentation +5V de la carte électronique est référencée au potentiel N de la tension réseau. Dans ce régime de fonctionnement, la tension dans la branche 18 est nulle car la phase auxiliaire est directement branchée par la branche de circuit 18 au réseau 11. La tension combinée ΔU correspond alors à la tension U1. L'analyse du déphasage est effectué entre la tension U1 et l'intensité du courant I1. Le déphasage est déterminé lors du passage à zéro de la tension U1 et l'intensité I1.

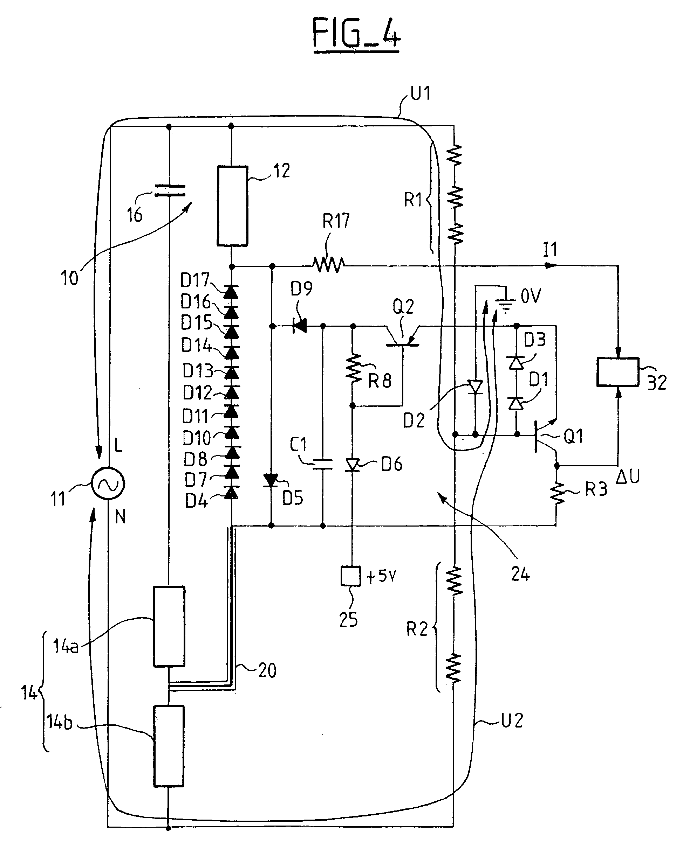

Sur la figure 4, le moteur est en régime de vitesse moyenne. Une extrémité de la phase principale 12 est reliée entre les deux demi-enroulements 14a et 14b de la phase auxiliaire 14. La phase principale est reliée par la branche de circuit 20 à la phase auxiliaire 14. La phase principale 12 est alors en série avec le demi-enroulement 14b. L'alimentation 5V de la carte électronique est référencée au potentiel point milieu entre les deux demi-enroulements 14a et 14b. Dans ce mode de fonctionnement, on obtient une influence de la phase principale et de la phase auxiliaire sur le déphasage entre la tension combinée et l'intensité du courant. Ceci a comme avantage d'avoir une grande plage de déphasage entre le passage à zéro du signal tension par rapport au passage à zéro du courant de la phase principale du moteur. On obtient ainsi des valeurs de déphasage Dt minimale et maximale qui sont très distinctes pour une vitesse sélectionnée ce qui rend plus précis l'asservissement du moteur avec le déphasage comme paramètre d'entrée. En vitesse moyenne, la phase principale du moteur est sous-alimentée par rapport au réseau car la phase principale est branchée en série avec le demi-enroulement 14b. La variation du déphasage de la tension de U1 et du courant de la phase principale du moteur en fonction de la charge de celui-ci, se trouve réduite. La variation du déphasage de la tension combinée des phases principale et secondaire, par rapport au courant de la phase principale en fonction de la charge du moteur, permet une plus grande précision d'asservissement lorsque le déphasage Dt est utilisé comme paramètre d'entrée du microcontrôleur 32.

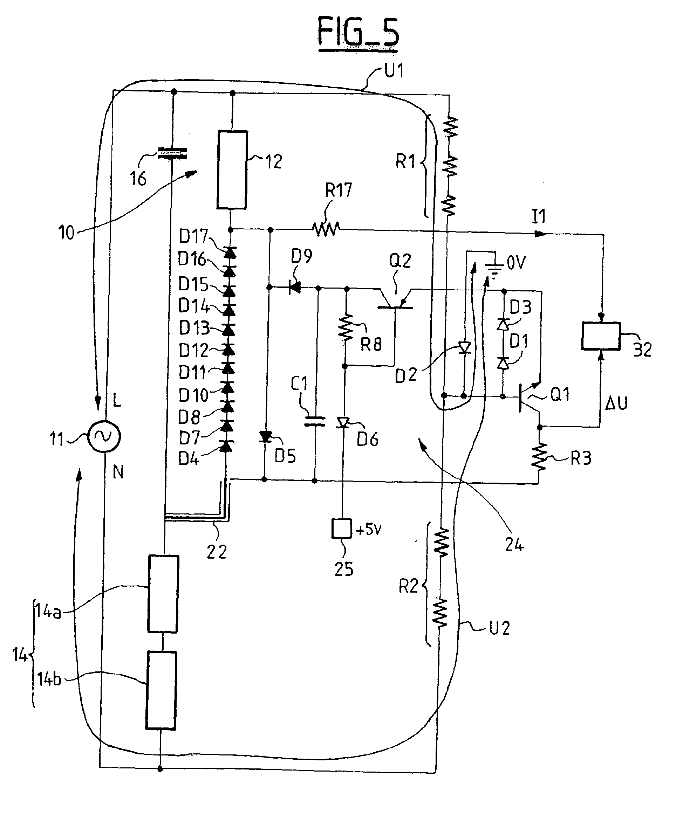

Sur la figure 5, le moteur est en régime de vitesse minimale. La phase principale 12 est branchée en série avec toute la phase auxiliaire 14 par la branche de circuit 22. L'alimentation +5V de la carte électronique est référencée au point de connexion entre le condensateur 16 du moteur et de l'extrémité de la phase auxiliaire 14. Dans cette configuration, la phase principale 12 est en série avec toute la phase auxiliaire 14. La phase principale 12 est encore plus sous-alimentée ce qui rend encore plus précis l'asservissement du moteur car les valeurs de déphasage Dt minimale et maximale sont encore plus distinctes pour la vitesse minimale. En régime de vitesse minimale, la réduction de la variation du déphasage est accentuée.

La figure 6, montre les différentes tensions mesurées par un oscilloscope. La figure 6 montre 4 courbes 36, 37, 38, 39. La courbe 36 représente les variations de la tension U1 aux bornes de la phase principale 12. La courbe 37 représente les variations de la tension U2 aux bornes de la phase auxiliaire 14. La courbe 38 représente la tension combinée ΔU aux bornes des diodes D1-D3 et D2. La courbe 39 représente la tension du réseau 11. La figure 6 montre quand le passage à zéro de la tension combinée est effectif. Le passage à zéro est effectif lorsque la différence UA entre la tension du réseau 11 et la tension U1 de la phase principale 12 est égale à UB qui est la tension U2 de la phase auxiliaire.

Avantageusement, les résistances R1 et R2 peuvent être choisies de telle sorte que le ratio entre R1 et R2 permettent de positionner la détection au passage à zéro de la tension combinée, par rapport à la tension du réseau.

## Revendications

1. Procédé de mesure de la puissance fournie par un moteur (10), le moteur (10) comprenant :
- une phase principale (12),
- une phase auxiliaire (14),
la phase principale (12) étant branchée en série avec tout ou partie de la phase auxiliaire (14),
le procédé comprenant les étapes de :
- détection de la tension (U1) de la phase principale (12),
- détection de la tension (U2) de la partie de la phase auxiliaire (14) en série avec la phase principale (12),
- détection de l'intensité (I1) du courant traversant la phase principale (12),
- analyse du déphasage entre le courant et la différence des tensions (U1, U2).

2. Le procédé de la revendication 1, **caractérisé en ce que** l'étape d'analyse du déphasage est réalisée par comparaison des passages à zéro du courant et de la différence des tensions (U1, U2).

3. Le procédé de la revendication 1 ou 2, **caractérisé en ce que** le moteur (10) comprend en outre une carte électronique (24) d'asservissement du moteur et que le procédé comprend en outre une étape d'asservissement du moteur par la carte électronique (24) après l'étape d'analyse du déphasage.

4. Le procédé de la revendication 3, **caractérisé en ce que** la carte électronique (24) comprend un microcontrôleur (32) effectuant l'étape d'analyse du déphasage.

5. Le procédé de la revendication 4, **caractérisé en ce que** le microcontrôleur (32) effectue l'étape d'asservissement du moteur après avoir effectué l'étape d'analyse.

6. Le procédé selon l'une des revendications 3 à 5, **caractérisé en ce que** la carte électronique (24) comprend des résistances (R1, R2) montées en parallèle par rapport aux phases principale et auxiliaire (12, 14).

7. Le procédé de la revendication 6, **caractérisé en ce que** l'une des résistances (R1) est montée aux bornes de la phase principale (12), l'étape de détection de la tension (U1) de la phase principale est effectuée en mesurant la tension aux bornes de ces résistances (R1).

8. Le procédé de la revendication 6 ou 7, **caractérisé en ce que** l'une des résistances (R2) est montée aux bornes de la phase auxiliaire (14), l'étape de détection de la tension (U2) de la phase auxiliaire (14) est effectuée en mesurant la tension aux bornes de ces résistances (R2).

## Claims

1. A method of measuring the power supplied by a motor (10), the motor (10) comprising:
- a main phase (12),
- an auxiliary phase (14),
the main phase (12) being connected in series with all or part of the auxiliary phase (14),
the method comprising the steps of:
- detecting the voltage (U1) of the main phase (12),
- detecting the voltage (U2) of the portion of the auxiliary phase (14) in series with the main phase (12),
- detecting the strength (I1) of the current flowing through the main phase (12),
- analyzing the phase shift between current and voltage difference (U1, U2).

2. The method of claim 1, **characterized in that** the step of analyzing the phase shift is achieved by comparing the zero crossings of the current and the voltage difference (U1, U2).

3. The method of claim 1 or 2, **characterized in that** the motor (10) further comprises an electronic circuit board (24) for servo control of the motor and the method further comprises a step of servo controlling the motor using the electronic circuit board (24) after the step of analyzing phase shift.

4. The method of claim 3, **characterized in that** the electronic circuit board (24) includes a microcontroller (32) performing the step of analyzing the phase shift.

5. The method of claim 4, **characterized in that** the microcontroller (32) performs the step of servo controlling the motor after performing the analysis step.6.

6. The method according to one of claims 3-5, **characterized in that** the electronic circuit board (24) includes resistors (R1, R2) connected in parallel with respect to the main and auxiliary phases (12, 14).

7. The method of claim 6, **characterized in that** one of the resistors (R1) is mounted across the main phase (12), the step of detecting the voltage (U1) of the main phase being performed by measuring the voltage across these resistors (R1).

8. The method of claim 6 or 7, **characterized in that** one of the resistors (R2) is connected across the auxiliary phase (14), the step of detecting the voltage (U2) of the auxiliary phase (14) is done by measuring the voltage across these resistors (R2).

## Patentansprüche

1. Verfahren zur Messung der Leistung, die von einem Motor (10) abgegeben wird, wobei der Motor (10) aufweist:
- eine Hauptphase (12),
- eine Hilfsphase (14),
wobei die Hauptphase (12) mit der Gesamtheit oder einem Teil der Hilfsphase (14) in Reihe geschaltet ist,
wobei das Verfahren die Schritte umfasst des:
- Erfassens der Spannung (U1) der Hauptphase (12),
- Erfassens der Spannung (U2) des Teils der Hilfsphase (14), der mit der Hauptphase (12) in Reihe geschaltet ist,
- Erfassens der Stärke (I1) des Stroms, der durch die Hauptphase (12) fließt,
- Analysierens der Phasenverschiebung zwischen dem Strom und der Differenz der Spannungen (U1, U2).

2. Verfahren nach Anspruch 1, **dadurch gekennzeichnet, dass** der Schritt des Analysierens der Phasenverschiebung durch Vergleich der Nulldurchgänge des Stroms und der Differenz der Spannungen (U1, U2) erfolgt.

3. Verfahren nach Anspruch 1 oder 2, **dadurch gekennzeichnet, dass** der Motor (10) außerdem eine Elektronikkarte (24) zur Steuerung des Motors umfasst, und dass das Verfahren nach dem Schritt des Analysierens der Phasenverschiebung außerdem einen Schritt der Steuerung des Motors durch die Elektronikkarte (24) umfasst.

4. Verfahren nach Anspruch 3, **dadurch gekennzeichnet, dass** die Elektronikkarte (24) einen Mikrocontroller (32) umfasst, der den Schritt des Analysierens der Phasenverschiebung durchführt.

5. Verfahren nach Anspruch 4, **dadurch gekennzeichnet, dass** der Mikrocontroller (32) den Schritt der Steuerung des Motors durchführt, nachdem der Schritt des Analysierens durchgeführt wurde.

6. Verfahren nach einem der Ansprüche 3 bis 5, **dadurch gekennzeichnet, dass** die Elektronikkarte (24) Widerstände (R1, R2) umfasst, die in Bezug auf die Haupt- und Hilfsphasen (12, 14) parallel geschaltet sind.

7. Verfahren nach Anspruch 6, **dadurch gekennzeichnet, dass** einer der Widerstände (R1) an den Anschlüssen der Hauptphase (12) montiert ist, wobei der Schritt des Erfassens der Spannung (U1) der Hauptphase durchgeführt wird, indem die Spannung an den Anschlüssen dieser Widerstände (R1) gemessen wird.

8. Verfahren nach Anspruch 6 oder 7, **dadurch gekennzeichnet, dass** einer der Widerstände (R2) an den Anschlüssen der Hilfsphase (14) montiert ist, wobei der Schritt des Erfassens der Spannung (U2) der Hilfsphase (14) durchgeführt wird, indem die Spannung an den Anschlüssen dieser Widerstände (R2) gemessen wird.
